# EUROPÄISCHE PATENTSCHRIFT

(11) **EP 3 154 757 B1**
(45) Veröffentlichungstag und Bekanntmachung des Hinweises auf die Patenterteilung: **09.10.2019**
(21) Anmeldenummer: 15730101.1
(22) Anmeldetag: 10.06.2015
(51) Int. Cl.: B28B 19/00, B28B 21/94, F16L 58/18, F16L 58/10, F16L 9/08

(54) **VERFAHREN UND VORRICHTUNG ZUR HERSTELLUNG EINES KANALROHRELEMENTS**
METHOD AND APPARATUS FOR PRODUCING A SEWER PIPE ELEMENT
PROCÉDÉ ET DISPOSITIF DE FABRICATION D'UN ÉLÉMENT DE TUBE DE CANAL

(30) Priorität: 10.06.2014 DE 102014211030
(43) Veröffentlichungstag der Anmeldung: 19.04.2017
(73) Patentinhaber: BFS Betonfertigteilesysteme GmbH, 89143 Blaubeuren (DE)
(72) Erfinder: MÜLLER, Klaus, 89143 Blaubeuren (DE)
(74) Vertreter: Weickmann & Weickmann PartmbB
(86) Internationale Anmeldenummer: PCT/EP2015/062982
(87) Internationale Veröffentlichungsnummer: WO 2015/189295

(56) Entgegenhaltungen:
- EP-A2- 0 471 319
- DE-A1- 1 584 483
- DE-A1- 1 609 170
- DE-A1- 2 165 068
- JP-A- S6 271 614

## Beschreibung

Die vorliegende Erfindung betrifft ein Verfahren zur Herstellung eines Kanalrohrelements mit einer Kunststoffauskleidung sowie eine Vorrichtung zur Herstellung eines solchen Kanalrohrelements.

Kanalsysteme umfassen Abwasser-führende, meistens aus Beton hergestellte, Rohre, welche in der Erde häufig als Teil eines Kanalisationssystems verlegt werden. Der Zugang zu einem solchen Kanalsystem wird in vielen Fällen durch Einstiegsschächte gewährleistet, welche aus übereinander angeordneten Schachtringen und einem an der Spitze angeordneten Schachtkonus bestehen. Kanalrohrelemente umfassen insbesondere derartige Bauteile (Rohre, Schachtringe oder Schachtkonuse) eines Kanalsystems.

Die in einem Kanalsystem geführten Abwässer und die aus den Abwässern austretenden Gase führen in vielen Fällen zu einer Korrosion ungeschützter Kanalrohrelemente.

Es ist bekannt, Kanalrohrelemente mit einer Kunststoffauskleidung zu versehen, um die Korrosionsbeständigkeit des Kanalrohrelements zu erhöhen und das Strömungsverhalten der geführten Fluide zu verbessern.

Die EP 1 741 532 B1 offenbart ein Verfahren, in welchem ein Kunststoff direkt auf ein Element einer Form zur Bildung eines in einem Kanalsystem verwendeten Betonelements aufgespritzt wird, wonach die Form mit Beton gefüllt wird. Bei diesem Verfahren ist es jedoch notwendig, Abschnitte der Form in einem zusätzlichen Verfahrensschritt mit einer Kunststoffmaterialschicht zu versehen, was den Zeitaufwand und somit die Kosten bei der Herstellung des Betonelements in die Höhe treibt.

Ferner ist aus der EP 2 067 590 A2 ein Verfahren zur Herstellung eines Kanalrohrelements mit einer Kunststoffauskleidung bekannt, bei welchem zuerst ein Betonrohr in Schalungsbauweise mit einer Außenschale und einer Innenschale gefertigt wird. In einem folgenden Verfahrensschritt wird, nach zumindest teilweisen Entfernen der Innenschale, in das nicht vollständig ausgehärtete ersten Rohr ein Plastikinnenrohr eingebracht. Somit umfasst dieses Verfahren auch einen zusätzlichen Schritt, um die Kunststoffauskleidung vorzusehen, wodurch das Herstellungsverfahren des Kanalrohrelements komplexer und in die Länge gezogen wird, was wiederum die Herstellungskosten in die Höhe treibt.

Dokument DE 16 09 170 A1 offenbart den Gegenstand der Oberbegriffe der unabhängigen Ansprüche.

Dokumente DE 21 65 068 A1 und EP 0 471 319 A2 offenbaren Kanalrohrelemente sowie Verfahren und Vorrichtungen zu deren Herstellung.

Es ist eine erste Aufgabe der vorliegenden Erfindung, ein Verfahren zur Herstellung eines Kanalrohrelements mit einer Kunststoffauskleidung bereitzustellen, welches kostengünstig ausführbar ist.

Diese Aufgabe wird gemäß der Erfindung jeweils durch ein Verfahren nach Anspruch 1 gelöst, wobei bevorzugte Ausführungsformen der Erfindung in den Unteransprüchen 2 bis 4 beschrieben werden.

Ferner ist es eine zweite Aufgabe der vorliegenden Erfindung, eine Vorrichtung zur Herstellung eines Kanalrohrelements mit einer Kunststoffauskleidung bereitzustellen, mittels welcher Kanalrohrelemente mit einer Kunststoffauskleidung kostengünstig hergestellt werden können.

Diese Aufgabe wird gemäß der Erfindung jeweils durch eine Vorrichtung nach Anspruch 5 gelöst, wobei bevorzugte Ausführungsformen der Erfindung in den Unteransprüchen 6 bis 8 beschrieben werden.

Gemäß einem ersten Aspekt der vorliegenden Erfindung wird die oben genannte erste Aufgabe gelöst durch ein Verfahren zur Herstellung eines Kanalrohrelements mit einer Kunststoffauskleidung, wobei das Verfahren unter anderem die folgenden Schritte umfasst: (a) Bereitstellen einer Form, umfassend eine Außenschalung und eine Innenschalung wobei ein zwischen Außenschalung und Innenschalung definierter Formhohlraum ein zylindrisches Kanalrohrelement definiert, welches an einem axialen Ende einen Aufnahmeabschnitt aufweist und am gegenüberliegenden axialen Ende einen Steckabschnitt aufweist, wobei eine Innenquerschnittsabmessung des Aufnahmeabschnitts gleich oder größer ist als eine Außenquerschnittsabmessung des Steckabschnitts, so dass zur axialen Kopplung zweier benachbarter Kanalrohrelemente, der Steckabschnitt des einen Kanalrohrelements passend in den Aufnahmeabschnitt des benachbarten Kanalrohrelements eingesteckt werden kann, wobei die Innenschalung aus Kunststoffmaterial gebildet ist und einen ersten Schalungsabschnitt umfasst, der die Innenwandung des Aufnahmeabschnitts definiert, einen zweiten Schalungsabschnitt umfasst, der die Außenwandung des Steckabschnitts definiert, sowie einen dritten Schalungsabschnitt umfasst, der die Innenwandung eines axial zwischen Aufnahmeabschnitt und Steckabschnitt verlaufenden Rohrabschnitts des Kanalrohrelements definiert, (b) Einbringen eines Betons in die Form und (c) Entschalen der Außenschalung, wobei die Innenschalung nach dem Aushärten des Betons mit dem Beton verbunden bleibt und die Kunststoffauskleidung des fertigen Kanalrohrelements bildet.

Nach einem wichtigen Merkmal der Erfindung des ersten Aspekts bildet die Innenschalung der Form nach dem Aushärten des Betons die Kunststoffauskleidung des fertigen Kanalrohrelements. Die Innenschalung kann somit gleichzeitig sowohl als Schalungsbauteil als auch als Teil des fertigen Kanalrohrelements verwendet werden, so dass die Form einen einfacheren Aufbau aufweist. Außerdem kann ein Schritt des Entschalens einer Innenwandung des Kanalrohrelements entfallen, da die Innenschalung am Kanalrohrelement verbleibt.

In der Erfindung wird in dem Schritt des Bereitstellens der Form die Innenschalung mit vertikaler Zylinderachse aufgestellt, so dass Beton in axialer Richtung insbesondere von oben eingefüllt werden kann und den Formhohlraum zuverlässig ausfüllt. Der Aufnahmeabschnitt weist nach oben, sodass das Einfüllen des Betons weiter erleichtert wird. In dem Schritt des Einbringens des Betons wird der Beton durch einen radialen Zwischenraum zwischen dem ersten Schalungsabschnitt (der die Innenwandung des Aufnahmeabschnitts definiert) und der Außenschalung der Form in den Formhohlraum eingebracht. Der besondere Vorteil an dieser Variante ist, dass in diesem Bereich des radialen Zwischenraums zwischen erstem Schalungsabschnitt und Außenschalung eine durchgehende Kunststoffverkleidung nicht unbedingt erforderlich ist, da dieser Bereich nach dem Zusammenstecken benachbarter Kanalrohrelemente nicht zum Inneren des Kanals hin freiliegt und somit der Feuchtigkeitsschutz der Kunststoffauskleidung in diesem Abschnitt nicht unbedingt erforderlich ist.

Vorzugsweise ist der dritte Schalungsabschnitt ein statisch selbsttragender Rohrabschnitt, so dass er ohne zusätzliche Hilfsmittel oder Ständerkonstruktionen im Inneren der Außenschalung im Wesentlichen frei stehen kann oder in anderer Weise ohne größeren Aufwand aufgehängt oder abgestützt sein kann.

In einer weiteren bevorzugten Ausführungsform der Erfindung kann der erste Schalungsabschnitt durch eine von dem dritten Schalungsabschnitt separate Aufnahmemuffe gebildet sein oder/und der zweite Schalungsabschnitt kann durch eine von dem dritten Schalungsabschnitt separaten Steckmuffe gebildet sein, wobei dann die Aufnahmemuffe bzw. die Steckmuffe an einem jeweiligen axialen Ende des dritten Schalungsabschnitts fluiddicht befestigt ist. Durch separate Herstellung mindestens zweier Schalungsabschnitte aus erstem, zweitem und drittem Schalungsabschnitt kann die Herstellung der Innenschalung vereinfacht werden. Insbesondere kann der dritte Schalungsabschnitt besonders kostengünstig als einfaches zylindrisches Rohr ohne jegliche Formänderungen an den axialen Enden hergestellt sein. Die fluiddichte Befestigung zwischen den Schalungsabschnitten kann durch Kleben oder/und Schweißen oder/und Einfügen einer Dichtung oder/und durch Klemmsitz erfolgen.

Ein einfacher und leicht zu entschalender Aufbau der Form wird ferner erreicht, indem vorzugsweise ein radial äußerster Umfangsrand des zweiten Schalungsabschnitts die Außenschalung berührt. Die durch Kunststoff aus gekleidete Außenwandung des Steckabschnitts grenzt dann direkt an die Außenwandung des Kanalrohrelements, wobei der zweite Schalungsabschnitt beim Entschalen des Kanalrohrelements ohne Weiteres zusammen mit dem Kanalrohrelement von der Außenschalung getrennt werden kann. Besonders bevorzugt liegt der zweite Schalungsabschnitt mit seinem radial äußersten Umfangsrand an einer zylindrischen Innenwandung der Außenschalung an, so dass beim Einfüllen des Betons der zweite Schalungsabschnitt durch den Druck des Betons gegen die Innenwandung der Außenschalung gedrückt wird und an dieser Stelle eine ausreichend dichte Verbindung gewährleistet ist.

Die oben genannte zweite Aufgabe der vorliegenden Erfindung wird gemäß einem zweiten Aspekt der Erfindung gelöst und durch eine Vorrichtung zur Herstellung eines Kanalrohrelements gemäß einem der Ansprüche 5 bis 8. Mit einer solchen Vorrichtung werden die oben in Bezug auf das entsprechende Verfahren beschriebenen Vorteile und Effekte erzielt.

Die erste Aufgabe kann gelöst werden durch ein Verfahren zur Herstellung eines Kanalrohrelements mit einer Kunststoffauskleidung, wobei das Verfahren unter anderem auch die folgenden Schritte umfasst: Bereitstellen einer Form zum Herstellen des Kanalrohrelements, umfassend eine erste Muffe und ein Kunststoffelement; Einbringen eines Betons in die Form; Anbringen einer zweiten Muffe; Entschalen des Kanalrohrelements; wobei die erste Muffe mit dem Kunststoffelement und das Kunststoffelement mit der zweiten Muffe jeweils fluiddicht verbunden werden und zumindest einen Teil der Kunststoffauskleidung bilden. Das Kunststoffelement und die erste Muffe erfüllten jeweils eine Doppelfunktion als Teil der Form und als Teil der Kunststoffauskleidung, wodurch Teile der Form eingespart werden können, was die Herstellungskosten reduziert. Ferner ist durch die fluiddichte Verbindung der ersten Muffe mit dem Kunststoffelement und des Kunststoffelements mit der zweiten Muffe sichergestellt, dass diese Elemente der Kunststoffauskleidung so verbunden sind, dass der Beton des Kanalrohrelements vor Abwässern und aus den Abwässer austretenden Gasen (beziehungsweise allgemein vor Fluiden, welche sich in dem Kanalrohrelement befinden) an den Verbindungsstellen geschützt ist. Das Kunststoffelement ist vorzugsweise vor dem Schritt des Bereitstellens der Form von der ersten Muffe separat ausgebildet. Das Kunststoffelement ist vorzugsweise vor dem Schritt des Bereitstellens der Form von der zweiten Muffe separat ausgebildet. Die erste Muffe ist vorzugsweise vor dem Schritt des Bereitstellens der Form von der zweiten Muffe separat ausgebildet. Die erste und/oder zweite Muffe ist bzw. sind vorzugsweise aus einem Kunststoff ausgebildet. Die Form kann eine Außenschalung umfassen. Die Form kann eine Innenschalung umfassen, welche vorzugsweise das Kunststoffelement umfasst. Das Einbringen des Betons in die Form wird vorzugsweise mittels einer Betoneinbringungsvorrichtung vorgenommen. In dem Verfahren kann eine Anordnung zum Festlegen der Innenschalung relativ zu der Außenschalung bereitgestellt werden. Bei dem Anbringen der zweiten Muffe wird die zweite Muffe an dem Beton des noch nicht fertig gestellten Kanalrohrelements angebracht, wobei der Beton vorzugsweise zumindest teilweise ausgehärtet ist, besonders bevorzugt nicht ausgehärtet ist oder optional ausgehärtet ist. Die zweite Muffe kann während des Aushärtens des Betons durch ein Zusammenziehen des Betons um die zweite Muffe und/oder in der zweiten Muffe sicher festgelegt werden. Es wird jedoch bevorzugt, die zweite Muffe an dem Beton des noch nicht fertig gestellten Kanalrohrelements zu kleben, wobei der Beton nicht ausgehärtet sein kann, vorzugsweise zumindest teilweise ausgehärtet ist, besonders bevorzugt ausgehärtet ist. Wird die zweite Muffe wie oben beschrieben geklebt, so kann sie insbesondere in einem Schritt eines Klebens an dem Beton auch an das Kunststoffelement geklebt werden. In einer möglichen Ausführungsform kann die zweite Muffe jedoch ausschließlich an dem Kunststoffelement durch Kleben und/oder Schweißen und/oder einen Form- und/oder Kraftschluss angebracht werden.

Das Kunststoffelement ist vorzugsweise als ein Rohr ausgebildet, wobei das Rohr vorzugsweise einen im Wesentlichen konstanten Querschnitt senkrecht zu einer axialen Richtung des Rohrs aufweist. Insbesondere kann das Rohr eine reine Zylinderform aufweisen, welche eine konstante Kreisform als Querschnitt senkrecht zu einer axialen Richtung des Rohrs aufweist. Es kann jedoch auch an Rohre gedacht werden, die jeweils eine im Wesentlichen konstante Ellipsenform, Eierform oder Maulform als Querschnitt senkrecht zu einer axialen Richtung des Rohrs aufweisen. Derartige Rohre können einfach und kostengünstig, beispielsweise in einem Schritt eines Extrudierens, bereitgestellt werden, wobei eine Ausbildung von Formteilen wie z.B. Anschlüssen und/oder Muffen, welche mit einer komplizierten Herstellung eines Rohres (bzw. eines Kunststoffelements) verbunden ist, nicht auftritt. Unter Rohren, welche einen im Wesentlichen konstanten Querschnitt senkrecht zu einer axialen Richtung des Rohrs aufweisen, können nicht nur Rohre verstanden werden, bei denen eine Kreisform, eine Ellipsenform, eine Eierform, eine Maulform oder eine ähnliche Form sich aufgrund von Fertigungstoleranzen ändert, sondern insbesondere auch Rohre, bei denen sich der Querschnitt senkrecht zu einer axialen Richtung des Rohrs ändert, um eine Beeinflussung der Fließeigenschaften zu erreichen.

Als Material des Kunststoffelements und/oder der ersten Muffe und/oder der zweiten Muffe können Polyurea (Polyharnstoffe), Polyurethane, insbesondere thermoplastische Polyurethane oder vernetzte Polyurethane, Polyolefine, Polyvinylchlorid oder Polyamide verwendung finden.

In dem Verfahren kann die erste Muffe und/oder das Kunststoffelement selbsttragend sein. Die selbsttragende erste Muffe und/oder das selbsttragende Kunststoffelement kann somit ohne gesonderte Schritte beim Bereitstellen der Form vorgesehen werden, beispielsweise als ein Teil einer Innenschalung, insbesondere ohne einen Schritt eines Bereitstellens einer Abstützvorrichtung, beispielsweise eines Formkerns, wodurch das Verfahren besonders einfach und somit kostengünstig abläuft. Auch die zweite Muffe kann selbsttragend sein, insbesondere kann bei einem Anbringen der zweite Muffe an noch verformbaren Beton auf eine die Form (Gestalt) der zweiten Muffe stützende Stützanordnung verzichtet werden.

Im Rahmen dieser Anmeldung soll unter einem selbsttragenden Kunststoffelement oder einer selbsttragenden Muffe ein Element (Kunststoffelement oder Muffe) verstanden werden, welches seine Form ohne die Verwendung einer Stützanordnung und/oder Abstützvorrichtung bei einer bestimmungsgemäßen Verwendung im Wesentlichen beibehält. Insbesondere soll ein stehendes oder liegendes selbsttragendes Element nicht unter dem Eigengewicht zusammenfallen. Vorzugsweise behalten selbsttragende Elemente unter dem Druck des Betons beim Einbringen und/oder während eines Erstarren des Betons im Wesentlichen ihre Form, hierzu kann ein vorsichtiges und gleichmäßiges Einbringen des Betons notwendig sein, sodass eine gleichmäßige Druckverteilung während des Einbringen des Betons auf das Element gewährleistet wird. Hierzu wird der Beton vorzugsweise derart eingebracht, dass ein Füllstand des eingebrachten Betons in der Form während des Einbringens im Wesentlichen in der gesamten Form gleichmäßig ansteigt.

Es ist möglich, dass die erste Muffe, das Kunststoffelement und die zweite Muffe mit dem Beton nach dem Schritt des zumindest teilweisen Aushärtens des Betons fest verbunden sind. Hierzu können an der ersten Muffe, dem Kunststoffelement oder der zweiten Muffe Vorsprünge oder Anker vorgesehen sein, welche in den Beton hineinragen können. Alternativ oder zusätzlich kann an der ersten Muffe, dem Kunststoffelement oder der zweiten Muffe eine Haftvermittlungsschicht wie beispielsweise eine Klebeschicht oder eine Klebefolie vorgesehen sein. Durch die feste Verbindung wird eine mögliche mit der Zeit aufgrund von Beanspruchung oder Alterungsprozessen auftretende Verformung der ersten Muffe, des Kunststoffelements oder der zweiten Muffe verhindert.

Das Verfahren umfasst in einer bevorzugten Ausführungsform die folgenden Schritte in der Reihenfolge der Aufzählung: 1.) das Bereitstellen der Form zum Herstellen des Kanalrohrelements, umfassend die erste Muffe und das Kunststoffelement, wobei die Form ferner zumindest Teile einer Außenschalung umfasst, und wobei die erste Muffe mit dem Kunststoffelement fluiddicht verbunden wird; 2.) Anordnen eines Endeneinsatzes an der Form; 3.) das Einbringen eines Betons in die Form; 4.) das Entschalen des Kanalrohrelements; 5.) das Anbringen der zweiten Muffe, wobei das Kunststoffelement mit der zweiten Muffe fluiddicht verbunden wird. Dadurch, dass die zweite Muffe nach dem Schritt des Entschalens des Kanalrohrelements angebracht wird, kann dies besonders einfach ohne eine Behinderung durch sich an dem Kanalrohrelement noch befindenden Formteile ausgeführt werden. Die Form kann in Schritt 1.) die vollständige Außenschalung umfassen.

Alternativ können auf die Schritte 1.) bis 3.) in der oben angegebenen Reihenfolge die folgenden Schritte in der Reihenfolge 4'.), 5'.) und 6'.) folgen: 4'.) Entfernen des Endeneinsatzes; 5'.) das Anbringen der zweiten Muffe, wobei das Kunststoffelement mit der zweiten Muffe fluiddicht verbunden wird; und 6'.) das Entschalen des Kanalrohrelements. Vorzugsweise umfasst das Verfahren zwischen Schritt 3.) und 4'.) einen Schritt des zumindest teilweisen Aushärtens des Betons, ein vollständiges Aushärten in diesem Schritt ist zwar möglich, wird jedoch nicht bevorzugt. Dadurch, dass das Kanalrohrelement (noch nicht fertiggestellt) teilentschalt wird kann die zweite Muffe angebracht bzw. eingesetzt werden und mit dem Kunststoffelement fluiddicht verbunden werden, während der nicht entschalte Teil der Form das noch nicht fertige Kanalrohrelement während dieses Vorgangs vor Beschädigungen schützt, was den Ausschuss während der Herstellung und somit die Herstellungskosten reduziert. In dem möglichen Fall, dass der Beton noch nicht ausgehärtet ist, erlaubt das Anbringen der zweiten Muffe an den Beton des noch nicht fertig gestellten Kanalrohrelements eine besonders zuverlässige Verbindung der zweiten Muffe mit dem Beton, da der Beton sich währen des Aushärtens um die zweite Muffe und/oder in der zweiten Muffe zusammenziehen kann. Wie bereits oben beschrieben, kann in einer bevorzugten Ausführungsform das Anbringen der zweiten Muffe (Schritt 5.) bzw. Schritt 5'.)) durch ein Kleben vorgenommen werden.

In dem Verfahren kann der Schritt des Bereitstellens der Form zum Herstellen des Kanalrohrelements das Bereitstellen eines Endeneinsatzes umfassen. Das Bereitstellen eines Endeneinsatzes erlaubt es in einer einfachen und somit kostengünstigen Art und Weise, eine gewünschte Formgebung eines Endes des Kanalrohrelements zu realisieren. So kann der Endeneinsatz eine Negativform eines Endes eines Betonabschnitts des Kanalrohrelements aufweisen. Ferner kann der Endeneinsatz während eines Schritts eines Teilentschalens entfernt werden. Es ist möglich, vorzugsweise nach dem Schritt des Teilentschalens, an dem Ende des Betonabschnitts des Kanalrohrelements, von welchem der Endeneinsatz entfernt wird, die zweite Muffe anzubringen.

In dem Verfahren wird bevorzugt, dass die erste Muffe, das Kunststoffelement und vorzugsweise zumindest ein Teil des Endeneinsatzes die Innenschalung der Form bilden. Somit verbleibt der überwiegende Teil der Innenschalung in dem Kanalrohrelement, sodass ein Schritt des Entschalens des Kanalrohrelement besonders einfach und schnell abläuft.

Die Form umfasst vorzugsweise ferner eine Außenschalung und optional die zweite Muffe.

Es ist möglich, dass der Endeneinsatz mindestens eine Öffnung zum Einbringen des Betons umfasst. Hierdurch kann der Endeneinsatz eine Doppelfunktion aufweisen, er kann zur Formgebung des Kanalrohrelements dienen und gleichzeitig als Einfüllhilfe zum Einbringen des Betons in die Form ausgebildet sein.

Die in dem Verfahren verwendete Form zum Herstellen des Kanalrohrelements kann eine Außenschalung aufweisen, welche zumindest einen Teil des Endeneinsatzes umfasst. Somit kann ein komplizierter Abschnitt der Außenwandung des Kanalrohrelements unter Zuhilfenahme eines vorzugsweise von dem Rest der Außenschalung separaten Endeneinsatzes ausgebildet werden, wobei der Endeneinsatz beim Entschalen oder einem Teilentschalen besonders einfach entfernt werden kann, da der leichtere Endeneinsatz sich einfacher von einer komplizierten in Beton ausgebildeten Struktur lösen lässt, ohne diese zu beschädigen, als eine einteilige Außenschalung. Dies reduziert wiederum die Ausschussquote und somit die Kosten bei der Herstellung.

Vorzugsweise werden in dem Verfahren die erste Muffe mit dem Kunststoffelement und/oder das Kunststoffelement mit der zweiten Muffe fluiddicht verbunden durch die Verwendung eines Dichtungselements, durch Schweißen oder durch Kleben. Diese wohlbekannten Verfahren bieten eine sichere und kostengünstige Möglichkeit, eine fluiddichte Verbindung zwischen der ersten Muffe und dem Kunststoffelement und/oder dem Kunststoffelement und der zweiten Muffe auszubilden.

Unter einem Dichtungselement sollen im Rahmen dieser Anmeldung insbesondere eine Dichtung, eine Dichtungsmasse oder eine Dichtungsanordnung verstanden werden. Eine Dichtungsanordnung kann ein Rohr, eine Innen- oder Außenmuffe beziehungsweise eine Hülse umfassen, welche selbst dichtende Eigenschaften aufweist oder mit einer oder mit mehreren Dichtungen versehen ist oder mit Dichtungsmasse versehen ist.

In dem Verfahren kann die erste Muffe derart bereitgestellt werden oder die zweite Muffe derart angebracht werden, dass die erste Muffe beziehungsweise die zweite Muffe eine Stoßfläche eines herzustellenden Kanalrohrelements zumindest abschnittsweise, vorzugsweise vollständig, auskleidet. Somit erstreckt sich die Kunststoffauskleidung, deren Teil jeweils die erste Muffe beziehungsweise die zweite Muffe ist, bis zur Stoßfläche des Kanalrohrelements und kleidet diese zumindest abschnittsweise aus, wodurch es möglich ist, das gesamte Kanalrohrelement bis zu seiner Stoßfläche mit Kunststoff auszukleiden, wodurch das Kanalrohrelement besonders dicht ist. Ferner erlaubt eine Auskleidung an einer Stoßfläche das Bereitstellen einer Fläche, welche sich aufgrund Ihrer Oberflächenbeschaffenheit besonders gut dafür eignet, gegen ein weiteres Kanalrohrelement abgedichtet zu werden.

Unter einer Stoßfläche eines Kanalrohrelements ist eine Fläche zu verstehen, welche in einem verlegten Zustand des Kanalrohrelements direkt zu einem weiteren Kanalrohrelement, beispielsweise einer Stoßfläche des weiteren Kanalrohrelements, benachbart ist, wobei ein Dichtungselement zwischen der Stoßfläche des Kanalrohrelements und dem weiteren Kanalrohrelement angeordnet sein kann.

In dem Verfahren kann daran gedacht werden, dass die erste Muffe und das Kunststoffelement derart bereitgestellt werden und die zweite Muffe derart angebracht wird, dass die erste Muffe, das Kunststoffelement und die zweite Muffe eine Innenfläche eines herzustellenden Kanalrohrelements vollständig auskleiden. Hierdurch kann die Kunststoffauskleidung als Teil der Innenschalung ausgebildet werden, wodurch die Kunststoffauskleidung besonders einfach und somit kostengünstig bereitgestellt wird. Insbesondere kann die gesamte Kunststoffauskleidung aus Elementen der Form, beispielsweise aus Elementen einer Innenschalung der Form, vorzugsweise aus dem Kunststoffelement und aus der ersten Muffe, gegebenenfalls aus einem Dichtungselement oder aus mehreren Dichtungselementen, und aus der zweiten Muffe gebildet sein.

In dem Verfahren ist es möglich, dass die erste Muffe derart bereitgestellt wird oder/und die zweite Muffe derart angebracht wird, dass die erste Muffe oder/und die zweite Muffe eine Außenfläche eines herzustellenden Kanalrohrelements zumindest abschnittsweise auskleidet. An den durch die erste und/oder zweite Muffe ausgekleideten Abschnitten der Außenflächen wird durch die Auskleidung ein Schutz vor Beschädigungen realisiert. In einer Besonders bevorzugten Ausführungsform werden Kanten oder eine Kante, welche an dem herzustellenden Kanalrohrelement vorliegen bzw. vorliegt, beispielsweise eine Kante an einem Übergang einer Stoßfläche und einer Außenfläche des herzustellenden Kanalrohrelements und/oder eine Kante an einem Übergang einer Stoßfläche und einer Innenfläche des herzustellenden Kanalrohrelements, durch die erste und/oder zweite Muffe ausgekleidet, wodurch ein Kantenschutz dieser Kanten realisiert wird. Hierdurch wird der Ausschuss beim Transport und beim Verlegen reduziert.

Das Verfahren kann ferner einen Schritt eines Anordnens eines Dichtungselements an der ersten Muffe und/oder an der zweiten Muffe umfassen. Hierdurch kann eine besonders dichte Verbindung des herzustellenden Kanalrohrelements mit einem weiteren Kanalrohrelement ausgebildet werden.

Die in dem Verfahren verwendete Form zum Herstellen des Kanalrohrelements kann einen Bereich zum Ausbilden wenigstens eines Transportabschnitts des Kanalrohrelements umfassen. Bildet die Form einen Transportabschnitt des Kanalrohrelements aus, so lassen sich die Kanalrohrelemente besonders einfach, beispielsweise auf einer Baustelle, transportieren.

Ein Kanalrohrelement, hergestellt nach einem der oben beschriebenen Verfahren löst die zweite Aufgabe der vorliegenden Erfindung, da das Verfahren zum Herstellen des Kanalrohrelements besonders kostengünstig abläuft.

Die zweite Aufgabe kann gelöst werden durch eine Vorrichtung zur Herstellung eines Kanalrohrelements mit einer Kunststoffauskleidung, vorzugsweise gemäß einem Verfahren der vorstehend beschriebenen Art, unter anderem auch umfassend: ein Form zum Herstellen des Kanalrohrelements, welche eine wiederverwendbare Außenschalung, eine Innenschalung, eine erste Muffe und eine zweite Muffe aufweist, wobei die Innenschalung ein Kunststoffelement zur einmaligen Verwendung bei einer Herstellung des Kanalrohrelements umfasst, wobei die erste Muffe und die zweite Muffe zur einmaligen Verwendung bei einer Herstellung des Kanalrohrelements vorgesehen sind, und wobei die erste Muffe, die zweite Muffe und das Kunststoffelement jeweils dazu eingerichtet sind, mit dem herzustellenden Kanalrohrelement dauerhaft verbunden zu sein; eine Betoneinbringungsvorrichtung zum Einbringen von Beton in die Form; und eine Anordnung zum Festlegen der Innenschalung relativ zu der Außenschalung. Durch die Verwendung von Teilen der Form, welche zur einmaligen Verwendung gedacht sind und eine Doppelfunktion als Teil der Form und Teil des herzustellenden Kanalrohrelements aufweisen, können Kanalrohrelemente kostengünstig hergestellt werden.

Die Vorrichtung kann ferner eine Vorrichtung zum Verbinden der zweiten Muffe mit dem Kunststoffelement umfassen. Hierdurch kann der Schritt des Verbindens der zweiten Muffe mit dem Kunststoffelement besonders sicher und schnell ausgeführt werden.

Die in der Vorrichtung verwendete Form kann dafür ausgebildet sein, die zweite Muffe aufzunehmen. Hierdurch kann die zweite Muffe von der Form geführt werden, wodurch die zweite Muffe besonders zuverlässig an der gewünschten Stelle an dem Beton des herzustellenden Kanalrohrelements platziert werden kann.

Die Merkmale der Form, des Kunststoffelements sowie der ersten und/oder zweiten Muffe können Merkmale der Vorrichtung sein.

Die Erfindung wird nachfolgend anhand bevorzugter Ausführungsbeispiele unter Bezugnahme auf die beigefügte Zeichnung näher erläutert. Es zeigen
Fig. 1: eine schematische Schnittansicht einer Form einer Vorrichtung zur Herstellung eines Kanalrohrelements mit einer Kunststoffauskleidung gemäß einer ersten nichterfindungsgemäßen Ausführungsform und
Fig. 2: eine schematische Schnittansicht einer Form einer erfindungsgemäßen Vorrichtung zur Herstellung eines Kanalrohrelements mit einer Kunststoffauskleidung gemäß einer zweiten Ausführungsform.

### Erste nichterfindungsgemäße Ausführungsform

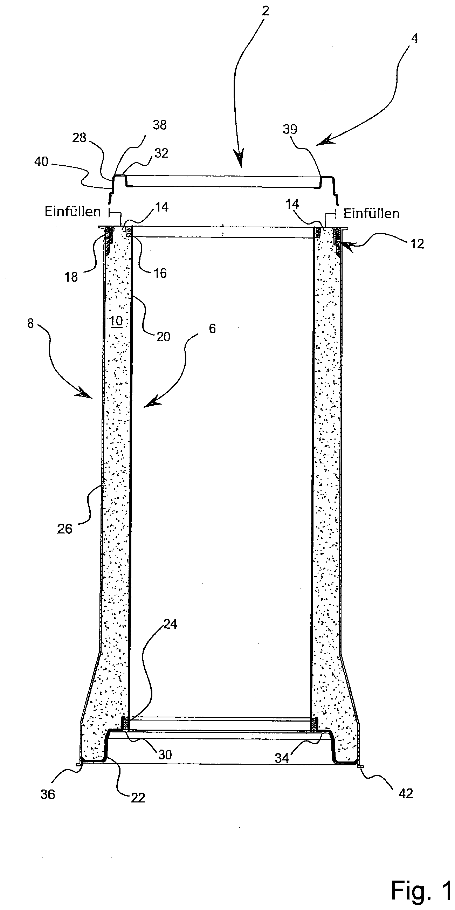

Fig. 1 zeigt eine schematische Schnittansicht einer Form 2 einer Vorrichtung 4 zur Herstellung eines Kanalrohrelements mit einer Kunststoffauskleidung Die Vorrichtung 4 umfasst eine nicht gezeigte Betoneinbringungsvorrichtung zum Einbringen von Beton in die Form 2. Die Form 2 umfasst eine Innenschalung 6 und ein wiederverwendbare Außenschalung 8. Die Außenschalung 8 ist vorzugsweise aus Metall, beispielsweise Stahl oder Edelstahl, gebildet oder umfasst zumindest aus Metall, beispielsweise Stahl oder Edelstahl, ausgebildete Teilelemente. Die Innenschalung 6 und die Außenschalung 8 definieren einen Forminnenraum 10 zur Aufnahme von Beton. Die Form 2 kann ein Endeneinsatz 12 umfassen, welcher vorzugsweise mindestens eine Öffnung 14, besonders bevorzugt mehrere Öffnungen 14, zum Einbringen des Betons umfasst. Der Endeneinsatz 12 kann vorzugsweise ein Innenringelement 16 und ein Außenringelement 18 umfassen. Das Innenringelement 16 kann mit dem Außenringelement 18 durch mindestens einen nicht gezeigten Steg, vorzugsweise eine Vielzahl von Stegen verbunden sein. Die mindestens eine Öffnung 14 ist vorzugsweise zwischen dem Innenringelement 16 und dem Außenringelement 18 ausgebildet, wobei mehrere Öffnungen 14 zwischen dem Innenringelement 16 und dem Außenringelement 18 ausgebildet sein können. Die Innenschalung 6 weist vorzugsweise ein Kunststoffelement 20 und eine erste Muffe 22 auf. Das Kunststoffelement 20 und die erste Muffe 22 sind fluiddicht miteinander verbunden. Dies kann durch ein Vorsehen eines Dichtungselements, vorzugsweise einer Dichtung 24, zwischen der ersten Muffe 22 und dem Kunststoffelement 20 erfolgen, die erste Muffe 22 und das Kunststoffelement 20 können jedoch auch fluiddicht durch Schweißen oder Kleben verbunden sein. Das Kunststoffelement 20 ist vorzugsweise aus einem selbstragenden Rohr ausgebildet.

Vorzugsweise ist das Kunststoffelement 20 und/oder die erste Muffe 22 selbsttragend ausgebildet, sodass es vorzugsweise dem Druck des eingefüllten Betons in den Forminnenraum 10 während des Herstellens des Kanalrohrelements widersteht, ohne, dass sich die Form dieser selbsttragenden Elemente im Wesentlichen ändert. Die erste Muffe 22, das Kunststoffelement 20 und das Innenringelement 16 des Endeneinsatzes 12 bilden vorzugsweise die Innenschalung 6 der Form 2. Die Außenschalung 8 umfasst vorzugsweise den Außenmantel 26 sowie das Außenringelement 18 als Teil des Endeneinsatzes 12.

Es zu beachten, dass die erste Muffe 22 und das Kunststoffelement 20 einen Teil der Kunststoffauskleidung des fertigen Kanalrohrelements ausbilden und somit mit dem fertigen Kanalrohrelement fest und dauerhaft verbunden sind. Hierzu können die erste Muffe 22, das Kunststoffelement 20 und die später noch zu beschreibende zweite Muffe 28 an einer Seite, welche dem Beton des Kanalrohrelements zugewandt ist, Anker, Erhebungen oder eine Haftvermittlungsschicht (Kleber, Harz o.ä.) aufweisen.

Nachdem der Beton in den Forminnenraum 10 eingebracht worden ist, kann, wenn ein Endeneinsatz 12 vorgesehen ist, abgewartet werden, bis der Beton zumindest teilweise ausgehärtet ist, danach kann der Endeneinsatz 12 entfernt werden und an dessen Stelle kann die zweite Muffe 28 eingesetzt werden. Die zweite Muffe 28 kann auf den teilweisen ausgehärteten Beton aufgesetzt werden, sodass beim Aushärten des teilweise ausgehärteten Betons sich der Betonkörper des Kanalrohrelements zusammenzieht und somit die zweite Muffe 28 gegenüber dem Betonkörper festlegt. Es ist jedoch auch möglich, dass die vorzugsweise in der zweiten Muffe 28 vorgesehenen Erhebungen oder Anker in den Beton eindringen, und somit nach einem Aushärten des Betons die zweite Muffe 28 gegenüber dem Beton festlegen. Die zweite Muffe 28 kann ein Teil der Form 2 sein, da die zweite Muffe 28 insbesondere bei der Formgebung des teilweise ausgehärteten und/oder noch verformbaren Betons mitwirken kann.

Der Übergang zwischen der zweiten Muffe 28 und dem Kunststoffelement 20 wird fluiddicht verbunden. Dies kann beispielsweise durch das Vorsehen eines Dichtungselements (nicht gezeigt), vorzugsweise einer Dichtung, erfolgen. Es ist jedoch auch möglich, die zweite Muffe 28 mit dem Kunststoffelement 20 fluiddicht zu verschweißen oder zu verkleben. Die erste und/oder zweite Muffe 22 bzw. 28 können aus Kunststoff hergestellt sein, es können jedoch auch Metall oder Keramik als Material der Muffen Verwendung finden.

Um ein Herausrutschen des beispielhaft als Dichtung 24 ausgebildeten Dichtungselements während eines Einbringens des Betons in den Forminnenraum 10 zu verhindern, kann die erste Muffe 22 optional eine Unterstützungsfläche 30 aufweisen (in der schematischen Fig. 1 als schraffierte optionale Fläche bzw. optionale Auskragung der ersten Muffe 22 dargestellt), auf welcher sich das Dichtungselement, hier die Dichtung 24, gegen den Druck des Betons aus dem Forminnenraum 10 abstützen kann. Die Fläche 32 der zweiten Muffe 28 bzw. die Fläche 34 der ersten Muffe 22 können eine sog. Stoßfläche eines hergestellten Kanalrohrelements, vorzugsweise wie abgebildet vollständig, aber auch optional abschnittsweise, auskleiden. Die Stoßflächen können somit durch Abschnitte der ersten bzw. zweiten Muffe ausgekleidet sein. Einerseits wird dadurch die Stoßfläche unempfindlicher gegenüber dem Kontakt mit scharfkantigen Gegenständen als eine reine Betonfläche, andererseits kann die Muffe an der Stelle, an welcher sie die Stoßfläche auskleidet besonders glatt ausgebildet sein, sodass sie besonders gut dafür eingerichtet ist, mit einem Dichtungselement zusammenzuwirken, um das Kanalrohrelement gegen ein weiteres Kanalrohrelement abzudichten.

Wird die zweite Muffe 28 erst nach Aushärten des Betons angeordnet, so kann die zweite Muffe 28 beispielsweise auf den Beton mittels Kleber oder einer Klebefolie festgelegt werden. Es ist jedoch auch möglich, die zweite Muffe 28 thermisch, mittels Strahlung oder chemisch zu behandeln und eine vorzugsweise damit verbundene Schrumpfung oder Verformung zum Festlegen auf dem Beton zu verwenden. Ist die zweite Muffe 28 angeordnet und fluiddicht mit dem Kunststoffelement 20 verbunden, so können, wie in der Fig. 1 dargestellt, die erste Muffe 22, die zweite Muffe 28 und das Kunststoffelement 20 die Innenfläche des herzustellenden Kanalrohrelements vollständig auskleiden.

Wie in Fig. 1 dargestellt, weist die erste Muffe 22 einen Bereich 36 auf, welcher eine Außenkante eines Endes des herzustellenden Rohrs auskleidet und die zweite Muffe 28 weist einen Bereich 38 und einen Bereich 39 auf, welche jeweils Kanten der Stoßfläche 32 an einem Übergang der Stoßfläche 32 zu einer Innenfläche beziehungsweise einer Außenfläche des herzustellenden Kanalrohrelements auskleiden. Ferner weist die zweite Muffe 28 einen Bereich 40 auf, welcher eine Außenfläche eines herzustellenden Kanalrohrelements zumindest abschnittsweise auskleidet. Diese Bereiche 36 bis 40 der ersten bzw. zweiten Muffe dienen dem Schutz von Kanten bzw. von dem darunterliegenden Beton.

Insbesondere kann an den Stoßflächen 30, 32 aber auch an der durch den Abschnitt 40 ausgekleideten Seite ein Dichtungselement angeordnet werden, um das Kanalrohrelement gegenüber einem benachbarten Kanalrohrelement abzudichten. Insbesondere kann ein Dichtungselement an der ersten und/oder an der zweiten Muffe angeordnet werden. Dies geschieht vorzugsweise auf eine verliersichere Art und Weise, beispielsweise durch Kleben oder durch ein Anordnen des Dichtungselements an der ersten und/oder an der zweiten Muffe an beziehungsweise in einer Nut (nicht gezeigt).

Um das Kanalrohrelement gut transportieren zu können, kann die Form zum Herstellen des Kanalrohrelements einen Bereich zum Ausbilden wenigstens eines Transportabschnitts des Kanalrohrelements umfassen. Ein derartiger Transportabschnitt kann eine Vertiefung oder eine Auskragung sein, es ist jedoch auch möglich, an der Außenschalung 8 eine Halterung für eine Metallöse o.ä. vorzusehen, welche nach dem Aushärten des Betons des Kanalrohrelements mit dem Kanalrohrelement fest verbunden ist.

Die Form 2 wird in der Vorrichtung 4 beispielsweise auf einem Gießtisch mittels Halterabschnitten 42 der Außenschalung 8 und einer nicht gezeigten Zentriereinrichtung zum Ausrichten des Kunststoffelements 20 und/oder der ersten Muffe 22 festgelegt. Hierdurch kann die Außenschalung 8 relativ zu der Innenschalung 6 festgelegt werden. Es ist jedoch auch möglich, die Innenschalung 6 relativ zu der Außenschalung 8 festzulegen, indem der Außenmantel 26, welcher ein Teil der Außenschalung 8 ist, und die erste Muffe 22, welche vorzugsweise ein Teil der Innenschalung 6 ist, über einen Fromschluss oder einen Kraftschluss beim Bereitstellen der Form 2 relativ zueinander festgelegt werden. Beispielsweise kann ein Vorsprung an dem Außenmantel 26 in eine Aussparung an der ersten Muffe 22 eingreifen, alternativ oder zusätzlich kann ein entsprechender Vorsprung an der ersten Muffe 22 auch in eine Aussparung an dem Außenmantel 26 eingreifen (in Fig. 1 jeweils nicht gezeigt). Auch eine Anordnung welche einen Fromschluss oder einen Kraftschluss ausbildet kann als eine Anordnung zum Festlegen der Innenschalung 6 relativ zu der Außenschalung 8 angesehen werden.

Die Form 2, kann, nachdem der Endeneinsatz 12 entfernt worden ist, die zweite Muffe 28 aufnehmen. Es kann jedoch auch daran gedacht werden, den Forminnenraum 10 ohne das Vorsehen eines Endeneinsatzes 12 mit Beton zu befüllen, wobei dann die zweite Muffe 28 in einer nicht gezeigten Ausführungsform beispielsweise als ein ringförmiges Element auf die Fläche des Betons aufgesetzt werden kann. Es ist jedoch auch möglich die zweite Muffe 28 in den noch verformbaren Beton im Forminnenraum 10 hineinzudrücken. Eine Anordnung der zweiten Muffe 28 geschieht vorzugsweise unter Zuhilfenahme einer Vorrichtung, beispielsweise einer Presse, zum Anordnen eben dieser Muffe.

Ferner kann die Vorrichtung 4 eine Vorrichtung zum Verbinden der zweiten Muffe 28 mit dem Kunststoffelement 20 umfassen. Hierbei kann es sich um eine Vorrichtung handeln, welche bei einem fertigen Kanalrohrelement miteinander verklebte Flächen des Kunststoffelements 20 und oder der zweiten Muffe 28 mit einem Klebstoff bestreicht. Es kann jedoch auch nur eine dieser Flächen mit einem Klebstoff versehen werden. Es ist jedoch auch möglich, dass die Vorrichtung zum Verbinden der zweiten Muffe 28 mit dem Kunststoffelement 20 eine Vorrichtung zum Verschweißen der zweiten Muffe 28 mit dem Kunststoffelement 20 ist, wobei vorzugsweise diese Vorrichtung zum Verbinden ein Material für die Schweißnaht während des Verbindens zuführt. Eine derartige Vorrichtung der Vorrichtung 4 oder diese Vorrichtung kann dazu verwendet werden, die erste Muffe 22 mit dem Kunststoffelement 20 zu verbinden.

### Ausführungsform eines Verfahrens

Im Folgenden wird ein Verfahren zur Herstellung eines Kanalrohrelements mit einer Kunststoffauskleidung beschrieben.

Vorzugsweise wird für das vorliegenden Verfahren die Vorrichtung der erster nichterfindungsgemäßen Ausführungsform zur Herstellung eines Kanalrohrelements mit einer Kunststoffauskleidung verwendet. Insbesondere können in dem Verfahren isolierte Elemente der Vorrichtung 4 bereitgestellt werden, ebenso können Eigenschaften der Form 2, der Vorrichtung 4, des Kunststoffelements 20, der ersten Muffe 22 oder der zweiten Muffe 28 für das Verfahren verwendet oder ausgenutzt werden.

Die im Folgenden nummerierten Schritte des Verfahrens werden in einer besonders bevorzugten Ausführungsform in der Reihenfolge der Nummerierung ausgeführt. Es ist jedoch auch möglich, die Reihenfolge der Schritte abzuändern. Es wird bevorzugt, dass ein Schritt mit einer geringeren Nummer vor einem Schritt mit einer höheren Nummer ausgeführt wird. Es ist möglich, optionale Schritte nicht auszuführen. Vorzugsweise ist einer der Schritte abgeschlossen, bevor ein anderer Schritt ausgeführt wird.
1.) In einem vorzugsweise ersten Schritt wird eine Form 2 zum Herstellen des Kanalrohrelements bereitgestellt, welche eine erste Muffe 22 und ein Kunststoffelement 20 umfasst. Die Form 2 kann, vorzugsweise in dem ersten Schritt, zumindest Teile einer Außenschalung 8 und/oder Innenschalung 6 umfassen.
2.) In einem vorzugsweise zweiten Schritt wird die erste Muffe 22 mit dem Kunststoffelement 20 fluiddicht verbunden, wobei dieser Schritt Teil des 1. Schritts sein kann. Vorzugsweise wird hierzu eine Vorrichtung, wie sie in der ersten Ausführungsform der vorliegenden Erfindung beschrieben wurde, verwendet.
   Bei dem fluiddichten Verbinden der ersten Muffe 22 mit dem Kunststoffelement 20 kann Dichtungselement, in der Ausführungsform eine Dichtung 24, zwischen dem Kunststoffelement 20 und der ersten Muffe 22 vorgesehen werden, es ist jedoch auch möglich, das Kunststoffelement 20 und die erste Muffe 22 fluiddicht miteinander zu kleben oder zu schweißen.
3.) Optional kann in einem dritten Schritt ein Endeneinsatz 12 an der Form 2 angeordnet werden.
4.) In einem vierten Schritt wird Beton in die Form 2 eingebracht.
5.) Optional kann in einem fünften Schritt der in die Form 2 eingebrachte Beton zumindest teilweise oder vollständig aushärten.
6.) Optional kann in einem sechsten Schritt das Kanalrohrelement (noch nicht fertiggestellt) teilentschalt beziehungsweise entschalt werden, wobei insbesondere der Endeneinsatz 12 von der Form 2 entfernt werden kann.
   Wird das Kanalrohrelement entschalt, so wird hierzu vorzugsweise nur der Außenmantel 26 und der Endeneinsatz 12 entfernt, da die Innenschalung 6 im Wesentlichen vollständig zum Bestandteil des hergestellten Kanalrohrelements geworden ist (wenn vorhanden, kann der optionale Endeneinsatz 12 mit seinem Innenringelement 16 und seinem Außenringelement 18 in einer bevorzugten Ausführungsform nicht Teil der Innenschalung 6 werden).
7.) In einem siebten Schritt des Verfahrens wird die zweite Muffe 28, vorzugsweise als Teil der Form, an einem Zwischenprodukt des herzustellenden Kanalrohrelements (beispielsweise an den Beton des noch nicht fertig gestellten Kanalrohrelements) während des Herstellungsverfahrens angebracht. Insbesondere kann in dem siebten Schritt die zweite Muffe 28 mit dem Kunststoffelement 20 fluiddicht verbunden werden. Das fluiddichte Verbinden der zweite Muffe 28 mit dem Kunststoffelement 20 kann jedoch auch in einem späteren Schritt vorgenommen werden.
   Insbesondere kann das fluiddichte Verbinden der zweite Muffe 28 mit dem Kunststoffelement 20 durch ein nicht gezeigtes Dichtungselement, zum Beispiel eine Dichtung, zwischen dem Kunststoffelement 20 und der zweiten Muffe 28 erfolgen, es ist jedoch auch möglich, das Kunststoffelement 20 und die zweite Muffe 28 miteinander fluiddicht zu kleben oder zu schweißen.
8) In einem achten Schritt des Verfahrens kann, sofern noch nicht Schritt 6.) geschehen, das Kanalrohrelement entschalt werden, wobei hierzu vorzugsweise nur der Außenmantel 26 entfernt werden muss, da die Innenschalung 6 im Wesentlichen vollständig (vergleiche Schritt 6.)) zum Bestandteil des hergestellten Kanalrohrelements geworden ist.

### Zweite erfindungsgemäße Ausführungsform

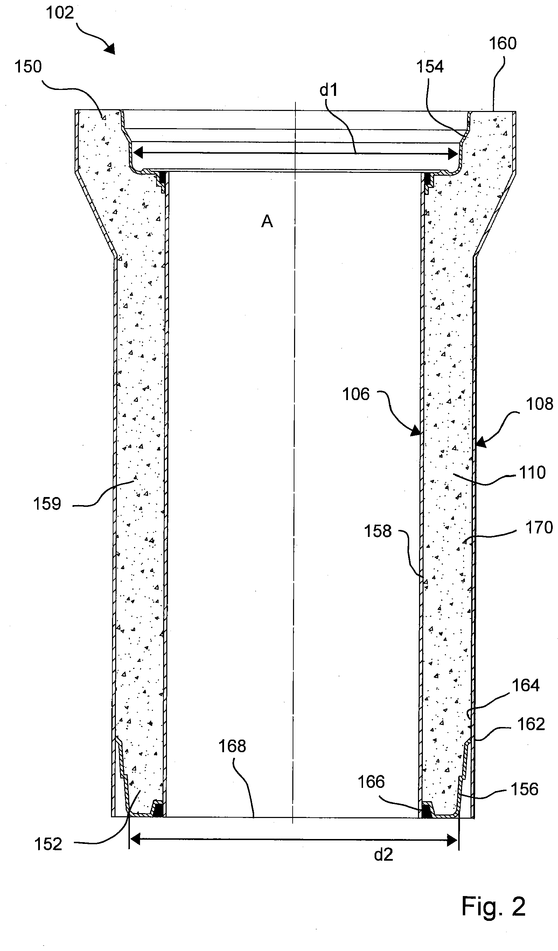

Unter Bezugnahme auf Figur 2 wird nachfolgend eine Vorrichtung und ein Verfahren zur Herstellung eines Kanalrohrelements mit einer Kunststoffauskleidung gemäß der zweiten erfindungsgemäßen Ausführungsform beschrieben. Dabei wird im Folgenden nur auf die Unterschiede zur Vorrichtung bzw. zum Verfahren der ersten nichterfindungsgemäßen Ausführungsform detailliert eingegangen und im Übrigen auf die Beschreibung der ersten Ausführungsform verwiesen.

Die in Figur 2 gezeigte Form 102 umfasst eine Außenschalung 108 sowie eine Innenschalung 106, wobei zwischen Außenschalung 108 und Innenschalung 106 ein Formhohlraum 110 eines zylindrischen Kanalrohrelements definiert ist, welches an einem oberen axialen Ende einen Aufnahmeabschnitt 150 aufweist und am gegenüberliegenden axialen Ende einen Steckabschnitt 152 aufweist. Aufnahmeabschnitt 150 und Steckabschnitt 152 sind so geformt, dass sie ineinander steckbar sind, wenn mehrere Kanalrohrelemente in axialer Richtung miteinander gekoppelt werden. Hierzu ist insbesondere eine Innenquerschnittsabmessung d1, im Falle eines kreiszylinderförmigen Kanalrohrelements ein Innendurchmesser d1, des Aufnahmeabschnitts 150 gleich oder größer als eine entsprechende Außenquerschnittsabmessung d2, im Falle eines kreiszylinderförmigen Kanalrohrelements ein Außendurchmesser d2, des Steckabschnitts 152. Werden zwei benachbarte Kanalrohrelemente axial miteinander gekoppelt, so passt der Steckabschnitt 152 des einen Kanalrohrelements gerade in den Aufnahmeabschnitt 150 des anderen Kanalrohrelements, so dass die beiden Kanalrohrelemente in axialer Richtung ein Stück weit in einander geschoben werden können und fluiddicht zueinander gehalten sind.

Die vorstehend beschriebene Ausgestaltung von Aufnahmeabschnitt und passendem Steckabschnitt kann, wie in der vorliegenden Ausführungsform in Figur 2 zu erkennen, durch einen erweiterten oder glockenförmigen Aufnahmeabschnitt 150 und einen passenden bzw. verjüngten Steckabschnitt 152 realisiert werden. Alternativ wäre denkbar, den Steckabschnitt 152 so stark zu verjüngen, dass er in einen nicht erweiterten Aufnahmeabschnitt passt. Letztere Variante wäre möglich, wenn eine gewisse Stufe oder Durchmesserverkleinerung des inneren Kanals im Bereich des Übergangs zwischen zwei Kanalrohrelementen in Kauf genommen werden kann.

Die Innenschalung 106 ist aus einem Kunststoffmaterial gebildet, wobei für Details auf die ausführlichere Beschreibung der Innenschalung der ersten Ausführungsform verwiesen wird. Die Innenschalung 106 umfasst einen ersten Schalungsabschnitt 154, der die Innenwandung des Aufnahmeabschnitts 150 definiert, einen zweiten Schalungsabschnitt 156, der die Außenwandung des Steckabschnitts 152 definiert, sowie einen dritten Schalungsabschnitt 158, der die Innenwandung eines axial zwischen dem Aufnahmeabschnitt 150 und dem Steckabschnitt 152 verlaufenden Rohrabschnitts 159 des Kanalrohrelements definiert. Erster Schalungsabschnitt 154, zweiter Schalungsabschnitt 156 und dritter Schalungsabschnitt 158 können gemeinsam als einstückiges oder integrales Kunststoffelement gebildet sein, beispielsweise durch ein Spritzgussverfahren oder durch ein Umformungsverfahren. Die Entschalung ist dann besonders leicht handhabbar. In dem bevorzugten Fall der in Figur 2 illustrierten Ausführungsform ist jedoch der erste Schalungsabschnitt 154 durch eine von dem dritten Schalungsabschnitt 158 separate Aufnahmemuffe gebildet, welche die Innenkontur des Aufnahmeabschnitts 150 auskleidet. Ferner ist der zweite Schalungsabschnitt 156 durch eine von dem dritten Schalungsabschnitt 158 separate Steckmuffe gebildet, welche die Außenkontur des Steckabschnitts 152 auskleidet. Aufnahmemuffe und Steckmuffe sind an den axial gegenüberliegenden Enden des dritten Schalungsabschnitts 158 aufgesteckt und mittels einer Dichtung 166 fluiddicht gegenüber dem dritten Schalungsabschnitt 158 abgedichtet.

In dem Verfahren zur Herstellung eines Kanalrohrelements gemäß der zweiten erfindungsgemäßen Ausführungsform kann in einem ersten Schritt die Außenschalung 108 bereitgestellt werden, in welcher die Innenschalung 106 konzentrisch eingesetzt ist, so dass die Zylinderachsen A von Außenschalung 108 und Innenschalung 106 zusammenfallen und vertikal nach oben weisen. Der dritte Schalungsabschnitt 158 ist vorzugsweise statisch selbsttragend, so dass er auf einem Boden 168 der Form 102 stehen kann und keine oder nur wenig statische Abstützung benötigt. Die Steckmuffe 156 sitzt ebenfalls am Boden 168 auf und berührt mit ihrem äußersten Umfangsrand 162 eine Innenwandung 164 der Außenschalung 108. Das axial untere Ende des Formhohlraums 110 ist somit im Querschnitt U-förmig definiert durch den dritten Schalungsabschnitt 158, den zweiten Schalungsabschnitt 156 und die Außenschalung 108. Vorzugsweise ist der zweite Schalungsabschnitt 156 im Querschnitt U-förmig oder L-förmig.

Anschließend kann von oben her ein Beton 170 in den Formhohlraum 110 zwischen Innenschalung 106 und Außenschalung 108 eingefüllt werden, bis der Formhohlraum 110 vollständig gefüllt ist. Das Einfüllen kann insbesondere durch einen Umfangsspalt bzw. einen radialen Zwischenraum 160 zwischen dem ersten Schalungsabschnitt 154 und der Außenschalung 108 erfolgen. Im Gegensatz zum axialen unteren Ende der Form 102 kann am oberen Ende ein Abstand zwischen dem ersten Schalungsabschnitt 154 und der Außenschalung 108 vorgesehen sein, da in diesem Bereich keine Kunststoffauskleidung zwingend erforderlich ist.

Nach teilweisem Aushärten oder vollständigem Aushärten des Betons 170 wird in einem weiteren Verfahrensschritt schließlich die Außenschalung 108 entfernt, beispielsweise durch Öffnen der Außenschalung 108 in radialer Richtung, bis die Außenschalung 108 vollständig entschalt ist. Die Innenschalung 106 einschließlich der drei Schalungsabschnitte 154, 156 und 158, verbleibt dagegen fest in Kontakt mit dem Beton 170 und bildet die gewünschte Kunststoffauskleidung des Kanalrohrelements, welche sich nicht nur über den mittleren Rohrabschnitt 159 erstreckt, sondern zusätzlich den Aufnahmeabschnitt 150 sowie den Steckabschnitt 152 im Wesentlichen vollständig mit Kunststoff auskleidet, so dass alle Abschnitte des Kanalrohrelements, welche mit in dem Kanal geführter Flüssigkeit in Kontakt gelangen können oder welche in Stoßkontakt mit einem benachbarten Kanalrohrelement gelangen können, im Wesentlichen vollständig mit Kunststoff ausgekleidet sind.

Nach der Herstellung des Kanalrohrelements kann eine neue Innenschalung 106 in die Außenschalung 108 eingesetzt werden und die Form 102 ist für die Herstellung eines neuen Kanalrohrelements vorbereitet.

## Patentansprüche

1. Verfahren zur Herstellung eines Kanalrohrelements mit einer Kunststoffauskleidung, wobei das Verfahren die folgenden Schritte umfasst:
- Bereitstellen einer Form (102), umfassend eine Außenschalung (108) und eine Innenschalung (106), wobei ein zwischen Außenschalung (108) und Innenschalung (106) definierter Formhohlraum (110) ein zylindrisches Kanalrohrelement definiert, welches an einem axialen Ende einen Aufnahmeabschnitt (150) aufweist und am gegenüberliegenden axialen Ende einen Steckabschnitt (152) aufweist, wobei eine Innenquerschnittsabmessung (d1) des Aufnahmeabschnitts (150) gleich oder größer ist als eine Außenquerschnittsabmessung (d2) des Steckabschnitts (152), so dass zur axialen Kopplung zweier benachbarter Kanalrohrelemente, der Steckabschnitt (152) des einen Kanalrohrelements passend in den Aufnahmeabschnitt (150) des benachbarten Kanalrohrelements eingesteckt werden kann,
wobei die Innenschalung (106) aus Kunststoffmaterial gebildet ist und einen ersten Schalungsabschnitt (154) umfasst, der die Innenwandung des Aufnahmeabschnitts (150) definiert, sowie einen dritten Schalungsabschnitt (158) umfasst, der die Innenwandung eines axial zwischen Aufnahmeabschnitt (150) und Steckabschnitt (152) verlaufenden Rohrabschnitts (154) des Kanalrohrelements definiert,
- Einbringen eines Betons in die Form (102),
- Entschalen der Außenschalung (108),
wobei die Innenschalung (106) nach dem Aushärten des Betons mit dem Beton verbunden bleibt und die Kunststoffauskleidung des fertigen Kanalrohrelements bildet, **dadurch gekennzeichnet, dass**
in dem Schritt des Bereitstellens der Form (102) die Innenschalung (106) einen zweiten Schalungsabschnitt (156) umfasst, der die Außenwandung des Steckabschnitts (152) definiert, und
dass in dem Schritt des Bereitstellens der Form (102) die Innenschalung (106) mit vertikaler Zylinderachse aufgestellt wird, wobei der Aufnahmeabschnitt nach oben weist, und
dass in dem Schritt des Einbringens des Betons der Beton durch einen radialen Zwischenraum (160) zwischen dem ersten Schalungsabschnitt (154) und der Außenschalung in den Formhohlraum (110) eingebracht wird.

2. Verfahren nach Anspruch 1, **dadurch gekennzeichnet, dass** der dritte Schalungsabschnitt (158) ein statisch selbstragender Rohrabschnitt ist.

3. Verfahren nach einem der vorhergehenden Ansprüche, **dadurch gekennzeichnet, dass** der erste Schalungsabschnitt (154) durch eine von dem dritten Schalungsabschnitt (158) separate Aufnahmemuffe gebildet ist oder/und dass der zweite Schalungsabschnitt (156) durch eine von dem dritten Schalungsabschnitt (158) separate Steckmuffe gebildet ist, wobei die Aufnahmemuffe bzw. die Steckmuffe an einem axialen Ende des dritten Schalungsabschnitts (158) fluiddicht befestigt ist.

4. Verfahren nach einem der vorhergehenden Ansprüche, **dadurch gekennzeichnet, dass** ein radial äußerster Umfangsrand (162) des zweiten Schalungsabschnitts (156) die Außenschalung (108) berührt, vorzugsweise an einer zylindrischen Innenwandung (164) der Außenschalung (108) anliegt.

5. Vorrichtung zur Herstellung eines Kanalrohrelements mit einer Kunststoffauskleidung, umfassend eine Form (102) mit einer Außenschalung (108) und einer Innenschalung (106), wobei ein zwischen Außenschalung (108) und Innenschalung (106) definierter Formhohlraum (110) ein zylindrisches Kanalrohrelement definiert, welches an einem axialen Ende einen Aufnahmeabschnitt (150) aufweist und am gegenüberliegenden axialen Ende einen Steckabschnitt (152) aufweist, wobei eine Innenquerschnittsabmessung (d1) des Aufnahmeabschnitts (150) gleich oder größer ist als eine Außenquerschnittsabmessung (d2) des Steckabschnitts (152), so dass zur axialen Kopplung zweier benachbarter Kanalrohrelemente, der Steckabschnitt (152) des einen Kanalrohrelements passend in den Aufnahmeabschnitt (150) des benachbarten Kanalrohrelements eingesteckt werden kann, wobei die Innenschalung (106) aus Kunststoffmaterial gebildet ist und einen ersten Schalungsabschnitt (154) umfasst, der die Innenwandung des Aufnahmeabschnitts (150) definiert, sowie einen dritten Schalungsabschnitt (158) umfasst, der die Innenwandung eines axial zwischen Aufnahmeabschnitt (150) und Steckabschnitt (152) verlaufenden Rohrabschnitts (154) des Kanalrohrelements definiert, **dadurch gekennzeichnet, dass**
die Innenschalung (106) einen zweiten Schalungsabschnitt (156) umfasst, der die Außenwandung des Steckabschnitts (152) definiert,
dass die Innenschalung (106) mit vertikaler Zylinderachse konzentrisch innerhalb der Außenschalung angeordnet ist, wobei der Aufnahmeabschnitt nach oben weist, und
dass ein radialer Zwischenraum (160) zwischen dem ersten Schalungsabschnitt (154) und der Außenschalung zum Einbringen des Betons ausgebildet ist.

6. Vorrichtung nach Anspruch 5, **dadurch gekennzeichnet, dass** der dritte Schalungsabschnitt (158) ein statisch selbstragender Rohrabschnitt ist.

7. Vorrichtung nach einem der Ansprüche 5 oder 6, **dadurch gekennzeichnet, dass** der erste Schalungsabschnitt (154) durch eine von dem dritten Schalungsabschnitt (158) separate Aufnahmemuffe gebildet ist oder/und dass der zweite Schalungsabschnitt (156) durch eine von dem dritten Schalungsabschnitt (158) separate Steckmuffe gebildet ist, wobei die Aufnahmemuffe bzw. die Steckmuffe an einem axialen Ende des dritten Schalungsabschnitts (158) fluiddicht befestigt ist.

8. Vorrichtung nach einem der Ansprüche 5 bis 7, **dadurch gekennzeichnet, dass** ein radial äußerster Umfangsrand (162) des zweiten Schalungsabschnitts (156) die Außenschalung (108) berührt, vorzugsweise an einer zylindrischen Innenwandung (164) der Außenschalung (108) anliegt.

## Claims

1. Method for producing a sewer pipe element with a plastics lining, the method comprising the following steps:
- providing a mould (102), comprising an outer formwork (108) and an inner formwork (106), a mould cavity (110) defined between the outer formwork (108) and inner formwork (106) defining a cylindrical sewer pipe element which has a receiving portion (150) at one axial end and a plug-in portion (152) at the opposite axial end, an inner cross-sectional dimension (d1) of the receiving portion (150) being equal to or greater than an outer cross-sectional dimension (d2) of the plug-in portion (152) such that, for the axial coupling of two adjacent sewer pipe elements, said plug-in portion (152) of one sewer pipe element can be inserted into the receiving portion (150) of the adjacent sewer pipe element so as to fit therein,
the inner formwork (106) being made of plastics material and comprising a first formwork portion (154) defining the inner wall of the receiving portion (150), and comprising a third formwork portion (158) which defines the inner wall of a pipe portion (154) of the sewer pipe element extending axially between the receiving portion (150) and the plug-in portion (152),
- introducing concrete into the mould (102),
- demoulding the outer formwork (108),
the inner formwork (106) remaining connected to the concrete after curing of the concrete and forming the plastics lining of the finished sewer pipe element, **characterised in that**
in the step of providing the mould (102), the inner formwork (106) comprises a second formwork portion (156) defining the outer wall of the plug-in portion (152), and
**in that** in the step of providing the mould (102), the inner formwork (106) is set up with a vertical cylinder axis, the receiving portion facing upwards, and
**in that** in the step of introducing the concrete, the concrete is introduced into the mould cavity (110) through a radial gap (160) between the first formwork portion (154) and the outer formwork.

2. Method according to claim 1, **characterised in that** the third formwork portion (158) is a statically self-supporting pipe portion.

3. Method according to either of the preceding claims, **characterised in that** the first formwork portion (154) is formed by a receiving sleeve which is separate from the third formwork portion (158) and/or **in that** the second formwork portion (156) is formed by a plug-in sleeve which is separate from the third formwork portion (158), the receiving sleeve or the plug-in sleeve being secured to an axial end of the third formwork portion (158) in a fluid-tight manner.

4. Method according to any of the preceding claims, **characterised in that** a radially outermost circumferential edge (162) of the second formwork portion (156) contacts the outer formwork (108), and preferably abuts a cylindrical inner wall (164) of the outer formwork (108).

5. Device for producing a sewer pipe element with a plastics lining, comprising a mould (102) with an outer formwork (108) and an inner formwork (106), a mould cavity (110) defined between the outer formwork (108) and inner formwork (106) defining a cylindrical sewer pipe element which has a receiving portion (150) at one axial end and a plug-in portion (152) at the opposite axial end, an inner cross-sectional dimension (d1) of the receiving portion (150) being equal to or greater than an outer cross-sectional dimension (d2) of the plug-in portion (152) such that, for the axial coupling of two adjacent sewer pipe elements, said plug-in portion (152) of one sewer pipe element can be inserted into the receiving portion (150) of the adjacent sewer pipe element so as to fit therein, the inner formwork (106) being made of plastics material and comprising a first formwork portion (154) defining the inner wall of the receiving portion (150), and comprising a third formwork portion (158) which defines the inner wall of a pipe portion (154) of the sewer pipe element extending axially between the receiving portion (150) and the plug-in portion (152), **characterised in that**
the inner formwork (106) comprises a second formwork portion (156) defining the outer wall of the plug-in portion (152),
**in that** the inner formwork (106) is arranged concentrically within the outer formwork with a vertical cylinder axis, the receiving portion facing upwards, and
**in that** a radial gap (160) is formed between the first formwork portion (154) and the outer formwork for introducing the concrete.

6. Device according to claim 5, **characterised in that** the third formwork portion (158) is a statically self-supporting pipe portion.

7. Device according to either claim 5 or claim 6, **characterized in that** the first formwork portion (154) is formed by a receiving sleeve which is separate from the third formwork portion (158) and/or **in that** the second formwork portion (156) is formed by a plug-in sleeve which is separate from the third formwork portion (158), the receiving sleeve or the plug-in sleeve being secured to an axial end of the third formwork portion (158) in a fluid-tight manner.

8. Device according to any of claims 5 to 7, **characterised in that** a radially outermost circumferential edge (162) of the second formwork portion (156) contacts the outer formwork (108), and preferably abuts a cylindrical inner wall (164) of the outer formwork (108).

## Revendications

1. Procédé de fabrication d'un élément de canalisation avec un revêtement en plastique, dans lequel le procédé comprend les étapes suivantes :
- la mise à disposition d'un moule (102), comprenant un coffrage extérieur (108) et un coffrage intérieur (106), dans lequel une cavité de moule (110) définie entre le coffrage extérieur (108) et le coffrage intérieur (106) définit un élément de canalisation cylindrique, lequel présente au niveau d'une extrémité axiale une section de réception (150) et présente au niveau de l'extrémité axiale opposée une section d'enfichage (152), dans lequel une dimension de section transversale intérieure (d1) de la section de réception (150) est égale ou supérieure à une dimension de section transversale extérieure (d2) de la section d'enfichage (152), de sorte que pour le couplage axial de deux éléments de canalisation adjacents, la section d'enfichage (152) de l'un élément de canalisation peut être enfichée de manière adaptée dans la section de réception (150) de l'élément de canalisation adjacent,
dans lequel le coffrage intérieur (106) est formé en matière plastique et comprend une première section de coffrage (154), qui définit la paroi intérieure de la section de réception (150), ainsi qu'une troisième section de coffrage (158), qui définit la paroi intérieure d'une section de tube (154) de l'élément de canalisation, s'étendant axialement entre la section de réception (150) et la section d'enfichage (152),
- l'introduction de béton dans le moule (102),
- le décoffrage du coffrage extérieur (108),
dans lequel le coffrage intérieur (106) reste relié au béton après le durcissement du béton et forme le revêtement en plastique de l'élément de canalisation terminé, **caractérisé en ce que**
dans l'étape de mise à disposition du moule (102), le coffrage intérieur (106) comprend une deuxième section de coffrage (156), qui définit la paroi extérieure de la section d'enfichage (152), et
que dans l'étape de mise à disposition du moule (102), le coffrage intérieur (106) est monté avec un axe cylindrique vertical, dans lequel la section de réception est dirigée vers le haut, et
que dans l'étape d'introduction du béton, le béton est introduit dans la cavité de moule (110) à travers un espace intermédiaire radial (160) entre la première section de coffrage (154) et le coffrage extérieur.

2. Procédé selon la revendication 1, **caractérisé en ce que** la troisième section de coffrage (158) est une section de tube statiquement autoportante.

3. Procédé selon l'une quelconque des revendications précédentes, **caractérisé en ce que** la première section de coffrage (154) est formée par un manchon de réception séparé de la troisième section de coffrage (158) et/ou que la deuxième section de coffrage (156) est formée par un manchon d'enfichage séparé de la troisième section de coffrage (158), dans lequel le manchon de réception ou le manchon d'enfichage est fixé de manière étanche au fluide au niveau d'une extrémité axiale de la troisième section de coffrage (158).

4. Procédé selon l'une quelconque des revendications précédentes, **caractérisé en ce qu'**un bord périphérique radialement le plus à l'extérieur (162) de la deuxième section de coffrage (156) touche le coffrage extérieur (108), de préférence s'appuie sur une paroi intérieure cylindrique (164) du coffrage extérieur (108).

5. Dispositif de fabrication d'un élément de canalisation avec un revêtement en plastique, comprenant un moule (102) avec un coffrage extérieur (108) et un coffrage intérieur (106), dans lequel une cavité de moule (110) définie entre le coffrage extérieur (108) et le coffrage intérieur (106) définit un élément de canalisation cylindrique, lequel présente au niveau d'une extrémité axiale une section de réception (150) et présente au niveau de l'extrémité axiale opposée une section d'enfichage (152), dans lequel une dimension de section transversale intérieure (d1) de la section de réception (150) est égale ou supérieure à une dimension de section transversale extérieure (d2) de la section d'enfichage (152), de sorte que pour le couplage axial de deux éléments de canalisation adjacents, la section d'enfichage (152) de l'un élément de canalisation peut être enfichée de manière adaptée dans la section de réception (150) de l'élément de canalisation adjacent, dans lequel le coffrage intérieur (106) est formé en matière plastique et comprend une première section de coffrage (154), qui définit la paroi intérieure de la section de réception (150), ainsi qu'une troisième section de coffrage (158), qui définit la paroi intérieure d'une section de tube (154) de l'élément de canalisation, s'étendant axialement entre la section de réception (150) et la section d'enfichage (152), **caractérisé en ce que**,
le coffrage intérieur (106) comprend une deuxième section de coffrage (156), qui définit la paroi extérieure de la section d'enfichage (152),
que le coffrage intérieur (106) est agencé avec un axe cylindrique vertical concentriquement à l'intérieur du coffrage extérieur, dans lequel la section de réception est dirigée vers le haut, et
qu'un espace intermédiaire radial (160) est réalisé entre la première section de coffrage (154) et le coffrage extérieur pour l'introduction du béton.

6. Dispositif selon la revendication 5, **caractérisé en ce que** la troisième section de coffrage (158) est une section de tube statiquement autoportante.

7. Dispositif selon l'une quelconque des revendications 5 ou 6, **caractérisé en ce que** la première section de coffrage (154) est formée par un manchon de réception séparé de la troisième section de coffrage (158) et/ou que la deuxième section de coffrage (156) est formée par un manchon d'enfichage séparé de la troisième section de coffrage (158), dans lequel le manchon de réception ou le manchon d'enfichage est fixé de manière étanche au fluide au niveau d'une extrémité axiale de la troisième section de coffrage (158).

8. Procédé selon l'une quelconque des revendications 5 à 7, **caractérisé en ce qu'**un bord périphérique radialement le plus à l'extérieur (162) de la deuxième section de coffrage (156) touche le coffrage extérieur (108), de préférence s'appuie sur une paroi intérieure cylindrique (164) du coffrage extérieur (108).
